# EUROPEAN PATENT SPECIFICATION

(11) **EP 3 480 049 B1**
(45) Date of publication and mention of the grant of the patent: **27.10.2021**
(21) Application number: 16907262.6
(22) Date of filing: 29.06.2016
(51) Int. Cl.: B60L 3/00, H02H 7/00, H02H 7/04, H02H 9/00

(54) **ALTERNATING-CURRENT ELECTRIC VEHICLE**
WECHSELSTROM-ELEKTROFAHRZEUG
VÉHICULE ÉLECTRIQUE À COURANT ALTERNATIF

(43) Date of publication of application: 08.05.2019
(73) Proprietor: Mitsubishi Electric Corporation, Chiyoda-ku Tokyo 100-8310 (JP)
(72) Inventor: HAYAMIZU, Shiki, Tokyo 100-8310 (JP)
(74) Representative: Witte, Weller & Partner Patentanwälte mbB
(86) International application number: PCT/JP2016/069277
(87) International publication number: WO 2018/003029

(56) References cited:
- EP-A1- 1 106 468
- WO-A1-2009/110061
- DE-A1-102014 208 245
- JP-A- H10 235 039
- JP-A- H10 260 739
- JP-A- 2004 174 530
- JP-A- 2007 325 476
- JP-A- 2010 200 576
- JP-A- 2010 215 014

## Description

### TECHNICAL FIELD

The present invention relates to an alternating-current electric vehicle.

### BACKGROUND ART

In a transformer, in general, unless a voltage is applied at an appropriate phase when a power is fed from a power supply, a magnetic flux of an iron core of the transformer is saturated, and a large current (so-called exciting inrush current) is transiently generated.

In an alternating-current electric vehicle equipped with a main transformer, when a vehicle that has been stopped in a storage track is connected to an overhead wire, an exciting inrush current may be generated in the main transformer, depending on a phase of an overhead wire voltage at the time of connection. Also, when the alternating-current electric vehicle on a conventional track passes through an insulation section called a dead section and enters a feeding section having a different voltage phase, an exciting inrush current may be generated in the main transformer, depending on the phase of the overhead wire voltage in the feeding section. There is a possibility that the exciting inrush current incurs transient voltage fluctuation of an electric power system, and induces malfunction of a protection device of feeder equipment. It also leads to an increase in capacity of the feeder equipment.

Document JP 2006 012759 A (PTL 1) discloses a device for reducing an exciting inrush current of a transformer. This device has a circuit breaker for applying the transformer to a three-phase power supply. In PTL 1, first, contacts of the circuit breakers of two phases for the three-phase power supply are closed at the moment when an inter-line voltage of the relevant two phases is maximum, and then, a contact of the circuit breaker of one remaining phase is closed at the moment when a phase voltage of the relevant one phase takes a maximum value.

PLT 2, according to its abstract, relates to a method that involves chaining the main switches of the drive vehicles in hardware or software so that they are switched on with a time offset in a sequence starting from the occupied driver position at one end of the drive vehicle train. The controllers for the main switches are looped so that each releases the next for switch-on after its own main switch has been switched on.

PLT 3, according to its abstract, relates to a rail vehicle having a first current collector which can supply a first transformer unit via a first main switch, at least one second current collector different from the first current collector and having a second current collector , from the first main switch different main switch can supply a second, of the first transformer unit different transformer unit, and an electrical connection unit through which a flow of energy between the first pantograph and the second transformer unit can be produced. The electrical connection unit has a switching unit which is adapted to the main switch in the direction of the energy flow in series.

### CITATION LIST

### PATENT LITERATURE

PTL 1: JP 2006 012759 A
PLT 2: EP 1 106 468 A1
PLT 3: DE 10 2014 208 245 A1

### SUMMARY OF INVENTION

### TECHNICAL PROBLEM

In the technique described in the above-described PTL 1, the two phases of the circuit breakers are first closed to excite the transformer into a predetermined state, and at the moment when a stationary magnetic flux coincides with this excitation, the remaining one phase of the circuit breaker is closed, by which the generation of the exciting inrush current is suppressed.

As described above, PTL 1 suppresses the exciting inrush current by adjusting the timing of closing the contacts of the circuit breakers, by utilizing the fact that the power supply is of three phases. On the other hand, since many of the alternating-current electric vehicles each employ a single-phase alternating-current feeding method, the technique described in PTL 1 cannot be applied.

Further, according to the technique described in PTL 1, it is necessary to monitor a voltage waveform of the power supply in order to close the contacts of the circuit breakers at the moment when the voltage phases of the power supply coincide with predetermined phases. However, it is difficult for the alternating-current electric vehicle traveling in the dead section to monitor the voltage waveform of the overhead wire in the next feeding section.

Furthermore, in the alternating-current electric vehicle, it is required to restore the power supply in a short time in order to secure use of a driving motor and various types of equipment inside the vehicle after the vehicle has passed through the dead section. Therefore, a technique is desirable that can efficiently reduce the exciting inrush current with a simple configuration that does not require monitoring of the voltage waveform of the overhead wire.

The present invention has been made to solve the above problems, and an object of the present invention is to provide an alternating-current electric vehicle that can reduce an exciting inrush current with a simple configuration.

### SOLUTION TO PROBLEM

Therefore, there is provided an alternating-current electric vehicle according to claim 1.

### ADVANTAGEOUS EFFECTS OF INVENTION

According to the present invention, it is possible to provide an alternating-current electric vehicle that can reduce an exciting inrush current with a simple configuration.

### BRIEF DESCRIPTION OF DRAWINGS

Fig. 1 is a diagram schematically showing a configuration of a railway vehicle system to which an alternating-current electric vehicle according to a first embodiment is applied.
Fig. 2 is a diagram showing a state in which the alternating-current electric vehicle according to the first embodiment passes through a dead section in order to enter a feeding section having a different voltage phase.
Fig. 3 is a waveform diagram for describing operation of the circuit breakers when the alternating-current electric vehicle enters the feeding section from the dead section, in an example not corresponding to the invention.
Fig. 4 is a waveform diagram for describing an example of the operation of circuit breakers when the alternating-current electric vehicle according to the first embodiment enters the feeding section from the dead: section, according to the present invention.
Fig. 5 is a waveform diagram for describing another , not corresponding to the invention, example of the operation of the circuit breakers when the alternating-current electric vehicle enters the feeding section from the dead section.
Fig. 6 is a diagram schematically showing a configuration of a railway vehicle system to which an alternating-current electric vehicle according to a second embodiment is applied.
Fig. 7 is a waveform diagram for describing an example of operation of circuit breakers when the alternating-current electric vehicle according to the second embodiment enters the feeding section from the dead section.

### DESCRIPTION OF EMBODIMENTS

Hereinafter, referring to the drawings, embodiments of the present invention will be described in detail. In figures, the same or corresponding parts are denoted by the same reference signs, and description thereof will not be repeated.

### First Embodiment

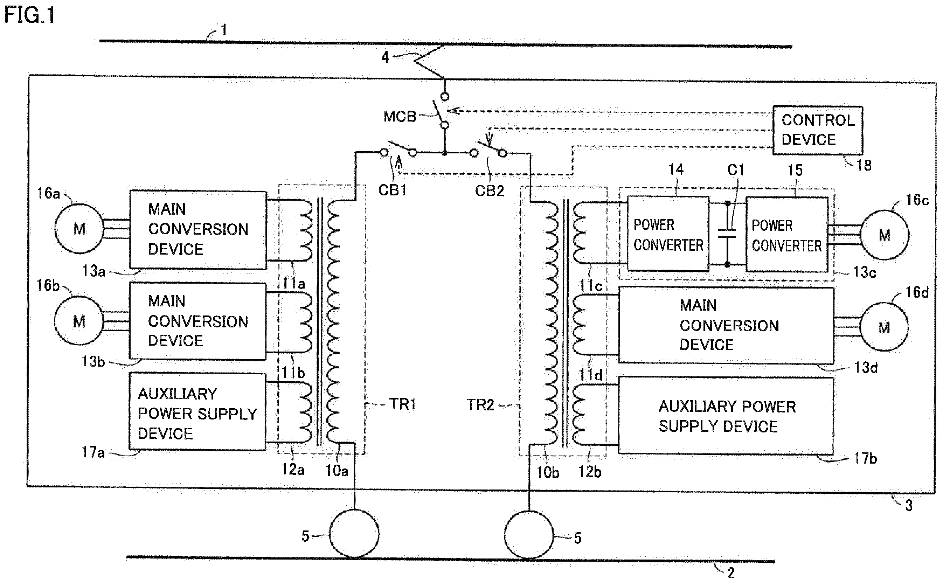

Fig. 1 is a diagram schematically showing a configuration of a railway vehicle system to which an alternating-current electric vehicle according to a first embodiment is applied. The railway vehicle system according to the first embodiment employs a single-phase alternating-current feeding method.

Referring to Fig. 1, in the railway vehicle system, a single-phase alternating-current power is fed to an overhead wire 1 from transforming equipment for feeding (not shown). An alternating-current electric vehicle 3 travels on a rail 2 in response to feeding of the single-phase alternating-current power from overhead wire 1.

Alternating-current electric vehicle 3 includes a pantograph 4, wheels 5, a first main transformer TR1, a second main transformer TR2, main conversion devices 13a to 13d, motors 16a to 16d, auxiliary power supply devices 17a, 17b, a main circuit breaker MCB, a first circuit breaker CB1, a second circuit breaker CB2, and a control device 18.

Pantograph 4 is a current collector for obtaining the single-phase alternating-current power from overhead wire 1. By raising pantograph 4 to attach pantograph 4 to overhead wire 1, alternating-current electric vehicle 3 can receive the feeding of the single-phase alternating-current power from overhead wire 1. On the other hand, when pantograph 4 is lowered to be detached from overhead wire 1, the feeding of the single-phase alternating-current power from overhead wire 1 to alternating-current electric vehicle 3 is cut off.

First main transformer TR1 and second main transformer TR2 are electrically connected to pantograph 4 in parallel. First main transformer TR1 steps down an overhead wire voltage applied via pantograph 4, and outputs the resultant to main conversion devices 13a, 13b and auxiliary power supply device 17a. First main transformer TR1 includes a primary winding 10a, secondary windings 1 1a, 11b, and a tertiary winding 12a. First main transformer TR1 selectively uses the secondary windings and the tertiary winding in accordance with a power feeding destination. Generally, a voltage excited in each of the secondary windings is set higher than a voltage excited in the tertiary winding.

One end of primary winding 10a of first main transformer TR1 is electrically connected to pantograph 4 and another end is electrically connected to wheel 5. Main conversion devices 13a, 13b are electrically connected to secondary windings 11a, 11b of first main transformer TR1, respectively. Main conversion devices 13a, 13b respectively convert alternating-current powers excited in secondary windings 11a, 11b into predetermined alternating-current powers, and feeds the resultant to motors 16a, 16b. Motors 16a, 16b generate a driving force of alternating-current electric vehicle 3.

Auxiliary power supply device 17a is electrically connected to tertiary winding 12a of first main transformer TR1. Auxiliary power supply device 17a is a power feeding source of various types of equipment (not shown) inside alternating-current electric vehicle 3. The various types of equipment include a computer that generally controls entire alternating-current electric vehicle 3, lighting equipment, air conditioning equipment, communication equipment and the like. Auxiliary power supply device 17a converts an alternating-current power excited in tertiary winding 12a into a predetermined alternating-current power, and feeds the resultant to the various types of equipment. Depending on the type of the equipment, auxiliary power supply device 17a can also convert the alternating-current power excited in tertiary winding 12a into a direct-current power and feed the resultant to the equipment.

Second main transformer TR2 steps down the overhead wire voltage fed via pantograph 4, and outputs the resultant to main conversion devices 13c, 13d and auxiliary power supply device 17b. Second main transformer TR2 includes a primary winding 10b, secondary windings 11c, 11d, and a tertiary winding 12b.

One end of primary winding 10b of second main transformer TR2 is electrically connected to pantograph 4, and another end is electrically connected to wheel 5. Main conversion devices 13c, 13d are electrically connected to secondary windings 11c, 11d of second main transformer TR2, respectively. Main conversion devices 13c, 13d convert the alternating-current powers excited in secondary windings 11c, lid into predetermined alternating-current powers and feed the resultant to motors 16c, 16d, respectively. Motors 16c, 16d generate the driving force of alternating-current electric vehicle 3. Auxiliary power supply device 17b is electrically connected to tertiary winding 12b of second main transformer TR2. Similarly to auxiliary power supply device 17a, auxiliary power supply device 17b is a power feeding source of various types of equipment inside alternating-current electric vehicle 3, and converts an alternating-current power excited in the tertiary winding 12b into a feeding power to the various types of equipment.

Main conversion devices 13a to 13d basically have the same configuration, and each include a power converter (converter) 14 for converting the alternating-current power excited into the secondary winding into a direct-current power, a smoothing capacitor C1, and a power converter (inverter) 15 for converting the direct-current electric power fed from power converter 14 into an alternating-current electric power and feeding the resultant to the motor.

Auxiliary power supply devices 17a, 17b basically have the same configuration, and each include a converter for converting the alternating-current power excited in the tertiary winding into a direct-current power, a smoothing capacitor, and an inverter for converting the direct-current power fed from the converter into an alternating-current power and feeding the resultant to the various types of equipment. Auxiliary power supply devices 17a, 17b may each include a direct-current/direct-current converter in place of the inverter.

As described above, first main transformer TR1 and second main transformer TR2 are electrically connected to overhead wire 1 via pantograph 4 in parallel. Main circuit breaker MCB, first circuit breaker CB1, and second circuit breaker CB2 are provided in power feeding paths from overhead wire 1 to first main transformer TR1 and second main transformer TR2, and conduct/cut off the power feeding paths.

Specifically, main circuit breaker MCB has a first terminal connected to pantograph 4. First circuit breaker CB1 has a first terminal connected to a second terminal of main circuit breaker MCB, and a second terminal connected to primary winding 10a of first main transformer TR1. Second circuit breaker CB2 has a first terminal connected to the second terminal of main circuit breaker MCB, and a second terminal connected to primary winding 10b of second main transformer TR2.

Control device 18 controls closing (conduction) and opening (cut-off) of each of main circuit breaker MCB, first circuit breaker CB1, and second circuit breaker CB2. Specifically, control device 18 closes first circuit breaker CB1 in a state where main circuit breaker MCB is closed, by which a voltage is applied to primary winding 10a of first main transformer TR1 from overhead wire 1 via pantograph 4. In accordance with the voltage applied to primary winding 10a, the voltages excited in secondary windings 11a, 11b and tertiary winding 12a are fed to main conversion devices 13a, 13b and auxiliary power supply device 17a, respectively.

Alternatively, control device 18 closes second circuit breaker CB2 in the state where main circuit breaker MCB is closed, by which the voltage is applied to primary winding 10b of second main transformer TR2 from overhead wire 1 via pantograph 4. In accordance with the voltage applied to primary winding 10b, the voltages excited in secondary windings 11c, 11d and tertiary winding 12b are fed to main conversion devices 13c, 13d and auxiliary power supply device 17b, respectively.

Control device 18 has a position detection unit for detecting a current position of alternating-current electric vehicle 3 from a signal from a GPS (Global Positioning System), a transponder or the like, and a route database in which position information of a dead section and the like is stored. Based on the current position of the vehicle and the route database, the position detection unit can detect whether alternating-current electric vehicle 3 is traveling in a feeding section or in a dead section. Control device 18 controls closing and opening of main circuit breaker MCB and circuit breakers CB1, CB2, based on the detection result of the position detection unit.

At this time, control device 18 can separately and independently close first circuit breaker CB1 and second circuit breaker CB2. Thereby, as will be described later, when power feeding from overhead wire 1 to alternating-current electric vehicle 3 is started, a time difference can be provided between timing of closing first circuit breaker CB1 and timing of closing second circuit breaker CB2.

Next, operation of circuit breakers MCB, CB1, CB2 in alternating-current electric vehicle 3 according to the first embodiment will be described.

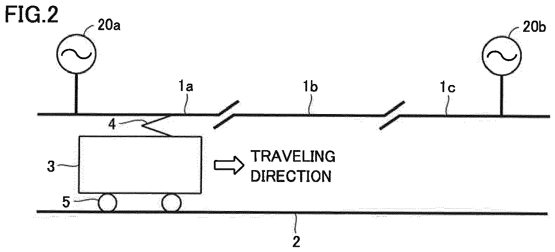

Fig. 2 shows that alternating-current electric vehicle 3 in a conventional track passes through a dead section in order to enter a feeding section having a different voltage phase. Referring to Fig. 2, between an overhead wire 1a in a feeding section connected to an electric power system 20a and an overhead wire 1c in a feeding section connected to an electric power system 20b having a different voltage phase from electric power system 20a, a dead section 1b is provided. Overhead wire 1a and overhead wire 1c are electrically insulated by dead section 1b. By providing dead section 1b, an electric power can be stably fed to traveling alternating-current electric vehicle 3 without influence by a difference in the voltage phase of the electric power system or the like.

As shown in Fig. 2, when alternating-current electric vehicle 3 enters dead section 1b from overhead wire 1a, the feeding from overhead wire 1a to alternating-current electric vehicle 3 is cut off. When entry of alternating-current electric vehicle 3 into dead section 1b is detected by the above-described position detection unit, control device 18 opens main circuit breaker MCB and circuit breakers CB1, CB2. Alternating-current electric vehicle 3 passes through dead section 1b while continuing coasting running.

Subsequently, when the position detection unit detects that alternating-current electric vehicle 3 has passed through dead section 1b and entered overhead wire 1c in the next feeding section, control device 18 closes main circuit breaker MCB and circuit breakers CB1, CB2. At this time, control device 18 first closes main circuit breaker MCB, and subsequently closes circuit breakers CB1, CB2. As a result, since pantograph 4 and main transformers TR1, TR2 are electrically connected to one another, the power feeding from overhead wire 1c to alternating-current electric vehicle 3 is started by pantograph 4.

Here, when circuit breakers CB1, CB2 are closed, there is a concern that exciting inrush currents are generated in main transformers TR1, TR2, depending on the phase of the overhead wire voltage (closing phase) at the time of closing. If an exciting inrush current occurs, there is a possibility that transient voltage fluctuation occurs in electric power system 20b. In addition, there is a possibility that a protection device of the feeder equipment malfunctions due to transient large current flowing.

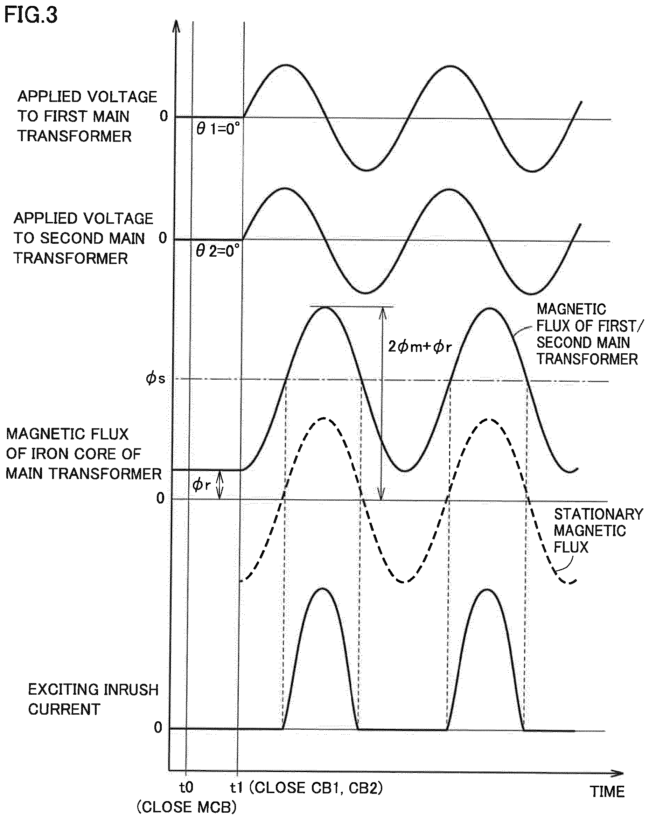

Fig. 3 is a waveform diagram for describing an example of the operation of the circuit breakers when alternating-current electric vehicle 3 enters the feeding section from the dead section. Fig. 3 shows a voltage (overhead wire voltage) applied to primary winding 10a of the first main transformer TR1 from overhead wire 1c in the feeding section next to dead section 1b through circuit breakers MCB, CB1, a voltage (overhead wire voltage) applied to primary winding 10b of second main transformer TR2 from overhead wire 1c through circuit breakers MCB, CB2, a magnetic flux of each iron core of main transformers TR1, TR2, and temporal change in an exciting inrush current of entire alternating-current electric vehicle 3.

The exciting inrush current of entire alternating-current electric vehicle 3 is an exciting inrush current flowing from overhead wire 1 to alternating-current electric vehicle 3, and corresponds to a sum of an exciting inrush current in first main transformer TR1 and an exciting inrush current in second main transformer TR2.

In Fig. 3, a residual magnetic flux φr of first main transformer TR1 and a residual magnetic flux φr of second main transformer TR2 are equal. As shown in Fig. 2, when alternating-current electric vehicle 3 enters dead section 1b, the power feeding to first main transformer TR1 and second main transformer TR2 is cut off at the same timing, and a state where no voltage is applied is brought about. A polarity and a magnitude of residual magnetic flux φr depend on timing at which the main transformer enters the state where no voltage is applied.

Referring to Fig. 3, when alternating-current electric vehicle 3 enters a feeding section from a dead section, control device 18 first closes main circuit breaker MCB at a time t0. Next, at a time t1 after time t0, control device 18 closes first circuit breaker CB1. Control device 18 may simultaneously close main circuit breaker MCB and first circuit breaker CB 1 at time t1.

When first circuit breaker CB1 is closed at time t1, the overhead wire voltage is applied to primary winding 10a of first main transformer TR1 from overhead wire 1c via pantograph 4. In the following description, a phase at which the overhead wire voltage becomes zero is set to 0°. In the example of Fig. 3, the phase of an overhead wire voltage (closing phase) θ1 when first circuit breaker CB1 is closed is 0°.

Generally, there is a phase difference of 90° between the voltage applied to the main transformer and the magnetic flux of the iron core of the main transformer. Therefore, as shown in Fig. 3, the magnetic flux of the iron core of first main transformer TR1 begins to increase from residual magnetic flux φr after time t1, and becomes maximum when the phase of the overhead wire voltage becomes 180°. Thereafter, the magnetic flux of the iron core of first main transformer TR1 decreases, and when the phase of the overhead wire voltage reaches 360°, it returns to residual magnetic flux Φr.

In Fig. 3, a magnetic flux (stationary magnetic flux) of the iron core when the overhead wire voltage is stationarily applied to first main transformer TR1 is indicated by a broken line. If a crest value of the stationary magnetic flux is φm, when closing phase θ1 of first circuit breaker CB1 is 0°, the magnetic flux of the iron core of first main transformer TR1 increases to about φr + 2φm. As a result, when the magnetic flux of the iron core of first main transformer TR1 exceeds a saturation magnetic flux φs, an exciting inrush current flows in first main transformer TR1. An attenuation time of the exciting inrush current becomes longer as a capacity of first main transformer TR1 increases.

A magnitude of the exciting inrush current varies, depending on the magnitude of the residual magnetic flux φr and the closing phase of the circuit breaker. Specifically, as residual magnetic flux φr becomes larger, a saturation time of the iron core of the main transformer becomes longer, and thus, the exciting inrush current increases. Moreover, if residual magnetic flux φr is constant, the exciting inrush current becomes maximum when the closing phase of the circuit breaker is 0°.

Here, , in an example which does not correspond to the invention, it is assumed that second circuit breaker CB2 is closed at the same timing as that of first circuit breaker CB1, in other words, the closing phases are matched between first circuit breaker CB1 and second circuit breaker CB2. In the example of Fig. 3, a closing phase θ2 of second circuit breaker CB2 is assumed to be 0°, which is the same as closing phase θ1 of first circuit breaker CB1 (θ1 = θ2 = 0°).

As described above, first main transformer TR1 and second main transformer TR2 have equivalent residual magnetic flux φr. Therefore, when second circuit breaker CB2 is closed at time t1, the magnetic flux of the iron core of second main transformer TR2 exhibits a waveform similar to that of the magnetic flux of the iron core of first main transformer TR1. As a result, the magnetic fluxes of the iron cores of first main transformer TR1 and second main transformer TR2 are saturated at the same timing, and as a result, the exciting inrush currents at the same level are generated.

As described above, when the exciting inrush currents at the same level are generated at the same time in first main transformer TR1 and second main transformer TR2, the exciting inrush current of entire alternating-current electric vehicle 3 increases twofold, as compared with the exciting inrush current of first main transformer TR1 alone. As a result, in electric power system 20b to which overhead wire 1c is connected, the transient voltage fluctuation becomes large, which may cause erroneous operation of protection equipment.

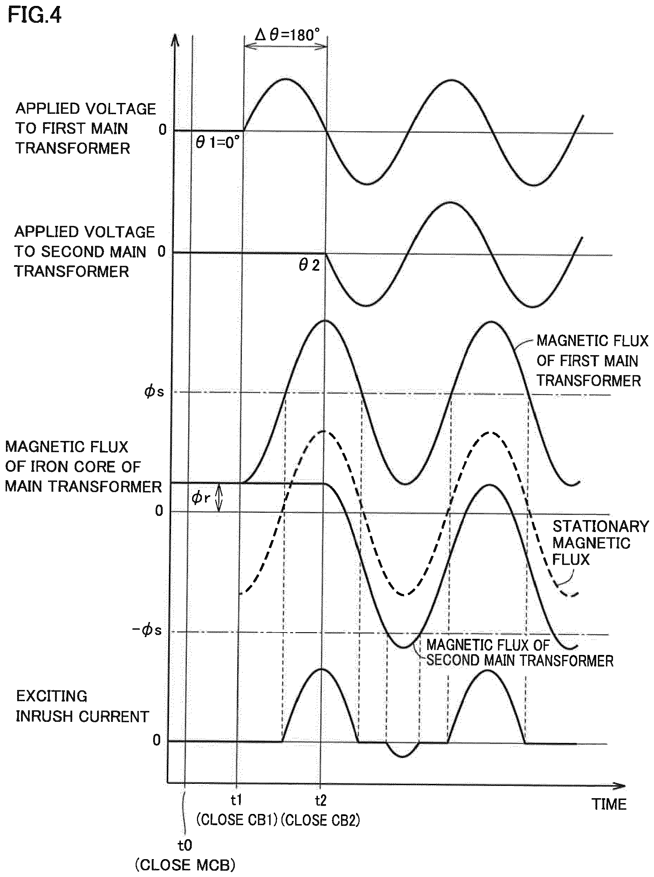

Consequently, in the first embodiment, when alternating-current electric vehicle 3 enters the next feeding section from the dead section, a difference is provided between closing phase θ1 of first circuit breaker CB1 and closing phase θ2 of second circuit breaker CB2. As an example, in Fig. 4, it is assumed that a difference of 180° is provided between closing phase θ1 of first circuit breaker CB1 and closing phase θ2 of second circuit breaker CB2 (Δθ = 180°).

Referring to Fig. 4, control device 18 sequentially closes first circuit breaker CB1 and second circuit breaker CB2, following a time difference in accordance with the set difference Δθ in the closing phase. More specifically, when first circuit breaker CB1 is closed at time t1, control device 18 closes second circuit breaker CB2 at a time t2 delayed by a predetermined time from time t1. For example, if a frequency of the voltage of overhead wire 1c is 50 Hz, and the difference Δθ in the closing phase is 180°, the predetermined time is set to about 0.01 second (= 1/50 second × 1/2 cycle).

In this way, as shown in Fig. 4, the magnetic flux of the iron core of second main transformer TR2 exhibits a waveform different from the magnetic flux of the iron core of first main transformer TR1. Particularly, the magnetic flux of the iron core of second main transformer TR2 begins to decrease from residual magnetic flux φr after time t2, and becomes minimum when the phase of the overhead wire voltage becomes 360°. Thereafter, the magnetic flux of the iron core of second main transformer TR2 increases and returns to residual magnetic flux Φr.

In Fig. 4, when the magnetic flux of the iron core of second main transformer TR2 falls below a saturation magnetic flux (-φs), an exciting inrush current flows in second main transformer TR2. However, since the exciting inrush current in second main transformer TR2 is opposite in polarity to the exciting inrush current in first main transformer TR1, they cancel each other out.

As described above, in first main transformer TR1 and second main transformer TR2, even if residual magnetic fluxes φr are equivalent, shifting the closing phases of first circuit breaker CB1 and second circuit breaker CB2 makes different the timing at which the exciting inrush current occurs. As a result, the exciting inrush current of entire alternating-current electric vehicle 3 can be reduced, as compared with the case where the closing phases of first circuit breaker CB1 and second circuit breaker CB2 are matched (see Fig. 3). This can reduce the transient voltage fluctuation in electric power system 20b.

Although illustration is omitted, even when the polarity of residual magnetic flux φr is negative, an effect of reducing the exciting inrush current of entire alternating-current electric vehicle 3 can be obtained. That is, regardless of the polarity and the magnitude of residual magnetic flux φr of main transformers TR1, TR2, it is possible to reduce the exciting inrush current of entire alternating-current electric vehicle 3.

While in the example of Fig. 4, the case where the difference between the closing phases of first circuit breaker CB1 and second circuit breaker CB2 is set to 180° (Δθ = 180°) has been described, essentially, in an example not corresponding to the invention, it is possible to reduce the exciting inrush current by providing a difference in the closing phases of first circuit breaker CB1 and second circuit breaker CB2 (that is, if Δθ ≠ 0). Therefore, the difference in the closing phase is not necessarily limited to 180°. This allows a slight deviation from the closing phase of second circuit breaker CB2. This makes it possible to simplify the control of the closing timing of circuit breakers CB1, CB2 by control device 18.

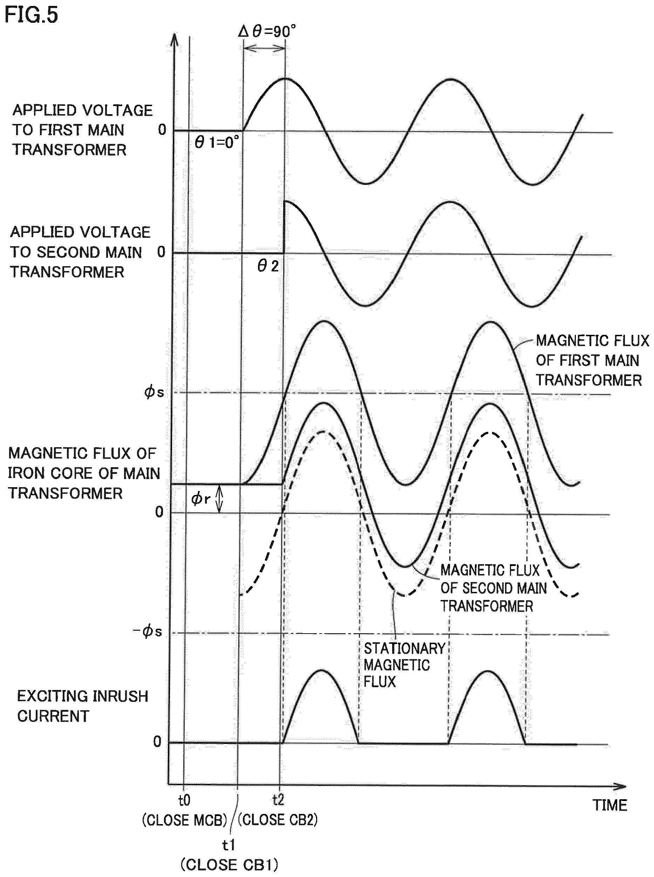

In an example not corresponding to the present invention, it is possible to obtain the effect of reducing the exciting inrush current even if the difference in the closing phase deviates by about ±90° from 180°. Fig. 5 shows temporal changes in the magnetic fluxes of the iron cores of main transformers TR1, TR2, and the exciting inrush currents when the difference between the closing phases of first circuit breaker CB1 and second circuit breaker CB2 is 90°. In Fig. 5, similarly to Fig. 4, closing phase θ1 of first circuit breaker CB1 is 0°.

Control device 18 closes first circuit breaker CB1 at time t1, and closes second circuit breaker CB2 at time t2 after time t1. The time difference between time t1 and time t2 is about 0.005 seconds (= 1/50 second × 1/4 cycle).

The magnetic flux of the iron core of second main transformer TR2 begins to increase from residual magnetic flux φr after time t2 and becomes maximum when the phase of the overhead wire voltage becomes 180°. Thereafter, the magnetic flux of the iron core of second main transformer TR2 increases, and when the phase of the applied voltage becomes 360°, it returns to residual magnetic flux Φr.

In Fig. 5, both the magnetic flux of first main transformer TR1 and the magnetic flux of second main transformer TR2 are maximum when the voltage phases are 180°. However, since the magnetic flux of second main transformer TR2 is lower than saturation magnetic flux φs, no exciting inrush current flows in second main transformer TR2. As a result, the exciting inrush current of entire alternating-current electric vehicle 3 can be reduced.

As described above, according to alternating-current electric vehicle 3 of the first embodiment, when the power feeding from overhead wire 1 to alternating-current electric vehicle 3 is started, a difference in the closing phase is provided between first circuit breaker CB1 electrically connected between overhead wire 1 and the primary winding of first main transformer TR1, and second circuit breaker CB2 electrically connected between overhead wire 1 and the primary winding of second main transformer TR2, which can reduce the exciting inrush current in entire alternating-current electric vehicle 3.

As scenes where the power feeding from overhead wire 1 to alternating-current electric vehicle 3 is started, there are a case where pantograph 4 of stopping alternating-current electric vehicle 3 is raised and connected to overhead wire 1, and a case where alternating-current electric vehicle 3 passes through the dead section and then enters the next feeding section (see Fig. 2). In the former case, which does not correspond to the present invention, control device 18 can provide a time difference longer than one cycle of the overhead wire voltage between the timing of closing first circuit breaker CB1 and the timing of closing second circuit breaker CB2. For example, after first circuit breaker CB1 is closed, second circuit breaker CB2 may be closed after waiting for the exciting inrush current in first main transformer TR1 to attenuate to some extent.

On the other hand, in the latter case, it is preferable that control device 18 sequentially closes first circuit breaker CB1 and second circuit breaker CB2 within one cycle of the overhead wire voltage, as it is provided according to the present invention. This is because when alternating-current electric vehicle 3 enters the feeding section from the dead section, it is necessary to immediately switch alternating-current electric vehicle 3 from coasting running to power running. At this time, if the time difference in the timing when circuit breakers CB1, CB2 are closed becomes long, there is a concern that the power feeding to motors 16c, 16d electrically connected to second main transformer TR2 is delayed, which hinders the operation of alternating-current electric vehicle 3. On the other hand, if the time difference in the closing timing of circuit breakers CB1, CB2 is made shorter than one cycle of the overhead wire voltage, the exciting inrush current can be reduced without affecting the operation of alternating-current electric vehicle 3.

Further, according to the alternating-current electric vehicle 3 of the first embodiment, the control device 18 actually only needs to manage the timing when circuit breakers CB1, CB2 are closed in accordance with the time difference based on the preset difference in the closing phase. For example, control device 18 can be configured to activate a timer when the entry of alternating-current electric vehicle 3 from the dead section to the feeding section is detected, and sequentially close circuit breakers CB1, CB2, based on output of the timer. This makes it unnecessary to use a detector for monitoring the voltage waveform of the overhead wire as in a conventional device. Also, there is no need to use a computing part for obtaining an optimum closing phase from the voltage waveform. As a result, it is possible to realize a reduction in the exciting inrush current with simple control and configuration.

### Second Embodiment

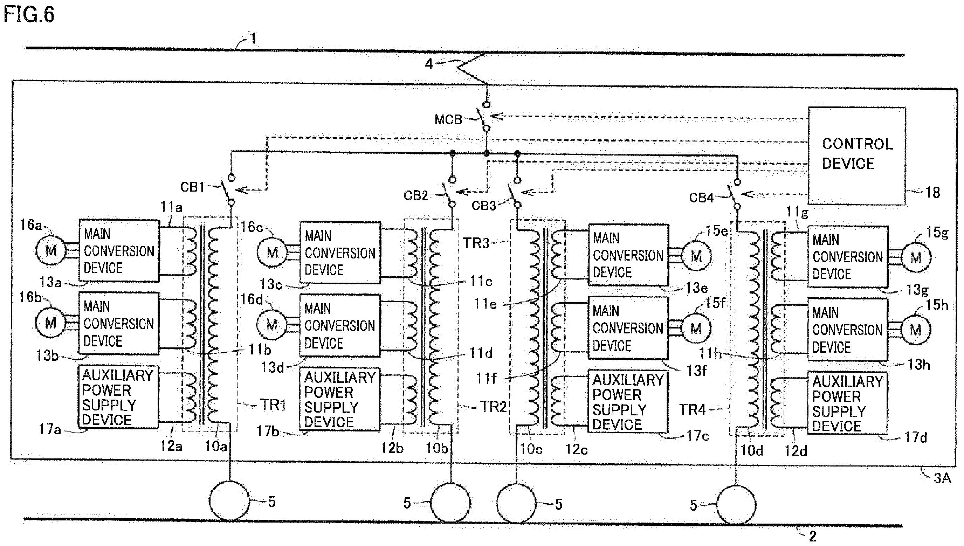

Fig. 6 is a diagram schematically showing a configuration of a railway vehicle system to which an alternating-current electric vehicle according to a second embodiment is applied. Referring to Fig. 6, while an alternating-current electric vehicle 3A according to the second embodiment has a basic configuration common to alternating-current electric vehicle 3 according to the first embodiment, alternating-current electric vehicle 3A is different in that it has more main transformers and main conversion devices.

Specifically, in alternating-current electric vehicle 3A, four main transformers TR1 to TR4 are electrically connected to the pantograph 4 in parallel. Among them, a third main transformer TR3 steps down an overhead wire voltage applied via pantograph 4 and outputs the resultant to main conversion devices 13e, 13f and an auxiliary power supply device 17c. Fourth main transformer TR4 steps down an overhead wire voltage applied via pantograph 4 and outputs the resultant to main conversion devices 13g, 13h and an auxiliary power supply device 17d.

Third main transformer TR3 includes a primary winding 10c, secondary windings 11e, 11f, and a tertiary winding 12c. One end of primary winding 10c of third main transformer TR3 is electrically connected to pantograph 4 and another end is electrically connected to wheel 5. Main conversion devices 13e, 13f are electrically connected to secondary windings 11e, 11f of third main transformer TR3, respectively. Main conversion devices 13e, 13f respectively convert alternating-current powers excited in secondary windings 11e, 1 1f into predetermined alternating-current powers, and feed the resultant to motors 16e, 16f. Auxiliary power supply device 17c is electrically connected to tertiary winding 12c of third main transformer TR3.

Fourth main transformer TR4 includes a primary winding 10d, secondary windings 11g, 11h, and a tertiary winding 12d. One end of primary winding 10d of fourth main transformer TR4 is electrically connected to pantograph 4 and another end is electrically connected to wheel 5. Main conversion devices 13g, 13h are electrically connected to secondary windings 11g, 11h of fourth main transformer TR4, respectively. Main conversion devices 13g, 13h respectively convert alternating-current powers excited in secondary windings 11g, 11h into predetermined alternating-current powers and feed the resultant to motors 16g, 16h. Auxiliary power supply device 17d is electrically connected to tertiary winding 12d of fourth main transformer TR4.

Main conversion devices 13a to 13h basically have the same configuration and each include a converter for converting an alternating-current power excited in the secondary winding to a direct-current power, a smoothing capacitor, and an inverter for converting the direct-current power fed from the converter into an alternating-current power and feeding the resultant to the motor.

Auxiliary power supply devices 17a to 17d basically have the same configuration and each include a converter for converting an alternating-current power excited in the tertiary winding into a direct-current power, a smoothing capacitor, and an inverter for converting the direct-current power fed from the converter into an alternating-current power and feeding the resultant to various types of equipment. Auxiliary power supply devices may each include a direct-current/direct-current converter in place of the inverter.

That is, in alternating-current electric vehicle 3A, main transformers TR1 to TR4 are electrically connected to overhead wire 1 in parallel. Main circuit breaker MCB and circuit breakers CB1 to CB4 are provided in power feeding paths from overhead wire 1 to main transformers TR1 to TR4, and conduct/cut off the power feeding paths.

Specifically, main circuit breaker MCB has a first terminal connected to pantograph 4. First circuit breaker CB1 has a first terminal connected to a second terminal of main circuit breaker MCB, and a second terminal connected to primary winding 10a of first main transformer TR1. Second circuit breaker CB2 has a first terminal connected to the second terminal of main circuit breaker MCB, and a second terminal connected to primary winding 10b of second main transformer TR2. Third circuit breaker CB3 has a first terminal connected to the second terminal of main circuit breaker MCB and a second terminal connected to primary winding 10c of third main transformer TR3. Fourth circuit breaker CB4 has a first terminal connected to the second terminal of main circuit breaker MCB and a second terminal connected to primary winding 10d of fourth main transformer TR4.

Control device 18 controls the closing and opening of main circuit breaker MCB and circuit breakers CB1 to CB4, based on a current position of alternating-current electric vehicle 3A detected by the position detection unit. Note that control device 18 can individually and independently close circuit breakers CB1 to CB4. As a result, as will be described later, when the power feeding from overhead wire 1 to alternating-current electric vehicle 3A is started, it is possible to sequentially close circuit breakers CB1 to CB4 with a time difference.

Next, operation of the circuit breakers when alternating-current electric vehicle 3A passes through the dead section from the feeding section, and enters the feeding section of a different voltage phase will be described.

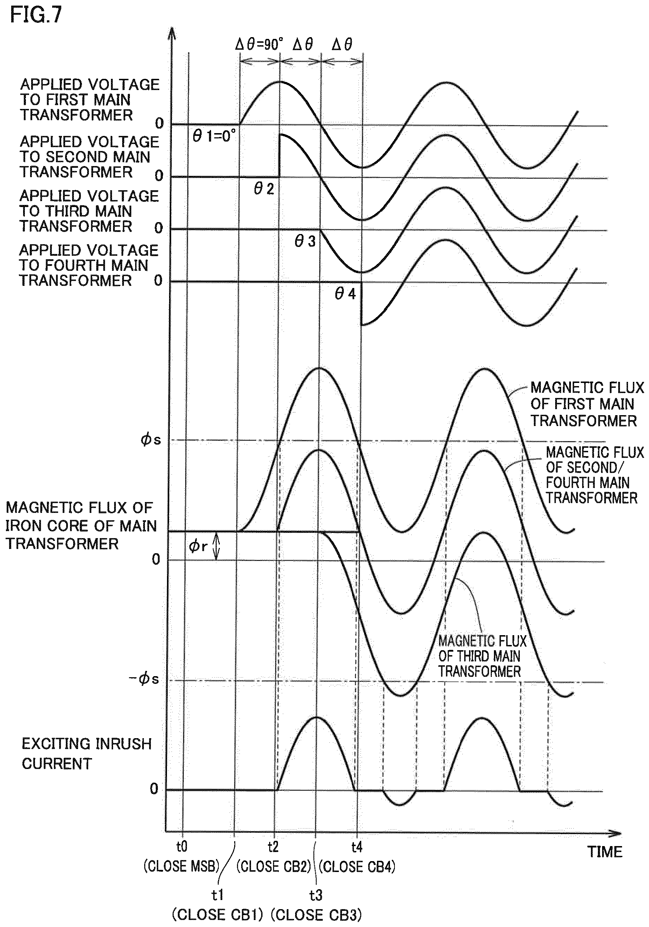

Fig. 7 is a waveform diagram for describing the operation of the circuit breakers when alternating-current electric vehicle 3A enters the feeding section from the dead section. In Fig. 7, a voltage (overhead wire voltage) applied to primary winding 10a of first main transformer TR1 from overhead wire 1c (see Fig. 2) in the feeding section next to the dead section through circuit breakers MCB, CB1, a voltage (overhead wire voltage) applied to primary winding 10b of second main transformer TR2 from overhead wire 1c through circuit breakers MCB, CB2, a voltage (overhead wire voltage) applied to primary winding 10c of third main transformer TR3 from overhead wire 1c through circuit breakers MCB, CB3, a voltage applied to primary winding 10d of fourth main transformer TR4 from overhead wire 1c through circuit breakers MCB, CB4, a magnetic flux of each of the iron cores of main transformers TR1 to TR4, and temporal change of the exciting inrush current are shown.

In Fig. 7, residual magnetic fluxes φr of main transformers TR1 to TR4 are equal to one another. When alternating-current electric vehicle 3A enters the dead section, the power feeding to main transformers TR1 to TR4 are cut off at the same timing and a state where no voltage is applied is brought about.

Referring to Fig. 7, when alternating-current electric vehicle 3A enters the feeding section from the dead section, control device 18 first closes main circuit breaker MCB at time t0. Subsequently, control device 18 sequentially closes circuit breakers CB1 to CB4 with a time difference.

In Fig. 7, according to the present invention, a difference of 90° is provided for a closing phase of each of circuit breakers CB1 to CB4 (Δθ = 90°). When control device 18 closes first circuit breaker CB1 at time t1 after time t0, it closes second circuit breaker CB2 at time t2 delayed by a predetermined time from time t1. Further, control device 18 closes third circuit breaker CB3 at a time t3 delayed by the predetermined time from time t2, and closes fourth circuit breaker CB4 at a time t4 delayed by the predetermined time from time t3.

For example, if the frequency of the voltage of overhead wire 1c is 50 Hz and the difference in the closing phase Δθ is 90°, the predetermined time is set to about 0.005 sec (= 1/50 sec × 1/4 cycle). Also, in alternating-current electric vehicle 3A according to the second embodiment, similarly to alternating-current electric vehicle 3 according to the first embodiment, control device 18 only needs to manage the timing when circuit breakers CB1 to CB4 are closed in accordance with the time difference based on the preset closing phase difference.

In this way, as shown in Fig. 7, the magnetic fluxes of the iron cores of main transformers TR1 to TR4 show different waveforms from one another. As a result, in main transformers TR1 to TR4, the timing when the exciting inrush currents occur differs, even though residual magnetic fluxes φr are equivalent. Therefore, it is possible to reduce the exciting inrush current of entire alternating-current electric vehicle 3A as compared with the case where the closing phases of circuit breakers CB1 to CB4 are matched. This can reduce transient voltage fluctuations in the electric power system.

Considering an influence on the operation of alternating-current electric vehicle 3A when alternating-current electric vehicle 3A enters the feeding section from the dead section, it is provided, according to the invention, to sequentially close circuit breakers CB1 to CB4 within one cycle of the overhead wire voltage. That is, according to the invention, a time difference between the closing timing of first circuit breaker CB1 and the closing timing of fourth circuit breaker CB4 is shorter than one cycle of the overhead wire voltage.

While in the first and second embodiments described above, the alternating-current electric vehicle equipped with the two or four main transformers have been described, in an example not corresponding to the invention, an alternating-current electric vehicle equipped with more main transformers can also be applied. When the feeding of the electric power from the overhead wire to the above-described alternating-current electric vehicle is started, the control device sequentially, with a time difference, closes the plurality of circuit breakers electrically connected between the overhead wire and the primary windings of the plurality of main transformers, which can reduce the exciting inrush current of the entire alternating-current electric vehicle.

At this time, since the control device only needs to sequentially close the plurality of circuit breakers in accordance with the set time difference, based on the difference in the closing phase without monitoring the voltage waveform of the overhead wire, the reduction of the exciting inrush current can be realized with the simple control and configuration.

According to the invention, the control device sets the difference in the closing phase to a value obtained by dividing 360° by a number of the plurality of main transformers. This enables the plurality of circuit breakers to be closed without overlapping the closing phases.

Further, according to the invention, the control device sequentially closes the plurality of circuit breakers within one cycle of the overhead wire voltage. By doing so, all of the plurality of circuit breakers can be closed in a short time, so that the exciting inrush current can be reduced without affecting the operation of the alternating-current electric vehicle.

It should be considered that the embodiments disclosed this time are examples in all respects and are not restrictive. The scope of the present invention is defined not by the description above but by the claims, and it is intended that all modifications within meaning and scope of the claims are included.

### REFERENCE SIGNS LIST

1, 1a, 1c: overhead wire, 1b: dead section, 2: rail, 3, 3A: alternating-current electric vehicle, 4: pantograph, 5: wheel, 10a to 10d: primary winding, 11a to 11h: secondary winding, 12a to 12d: tertiary winding, 13a to 13h: main conversion device, 14, 15: power converter, 16a to 16h: motor, 17a to 17d: auxiliary power supply device, 18: control device, C1: smoothing capacitor, MCB: main circuit breaker, CB1: first circuit breaker, CB2: second circuit breaker, CB3: third circuit breaker, CB4: fourth circuit breaker, TR1: first main transformer, TR2: second main transformer, TR3: third main transformer, TR4: fourth main transformer

## Claims

1. An alternating-current electric vehicle (3) that receives an alternating-current power from an overhead wire (1), comprising:
a plurality of main transformers (TR1, TR2) electrically connected to the overhead wire (1) and in parallel;
a plurality of circuit breakers (CB1, CB2) each connected between the overhead wire (1) and corresponding one of the plurality of main transformers (TR1, TR2); and
a control device (18) configured to close and open the plurality of circuit breakers (CB1, CB2),
**characterised in that**
the control device (18) is configured to sequentially close, when power feeding from the overhead wire (1) to the alternating-current electric vehicle (3) is started, the plurality of circuit breakers (CB1, CB2) within one cycle of a overhead wire voltage in accordance with a time difference,
wherein the time difference is set based on a difference in closing phases, each closing phase being a phase of the overhead wire voltage at the time of closing a respective one of the plurality of circuit breakers (CB1, CB2), wherein the difference in the closing phases is set to a value obtained by dividing 360 degrees by a number of the plurality of main transformers (TR1, TR2), wherein the number of the plurality of main transformers (TR1, TR2) is two or four.

2. The alternating-current electric vehicle (3) according to claim 1, wherein the control device (18) is configured to sequentially close the plurality of circuit breakers (CB1, CB2), when the alternating-current electric vehicle (3) enters a feeding section from an insulation section of the overhead wire (1), and to open the plurality of circuit breakers (CB1, CB2), when the alternating-current electric vehicle (3) is in the insulating section.

## Patentansprüche

1. Wechselstromelektrofahrzeug (3), das Wechselstromleistung von einer Oberleitung (1) empfängt, mit:
einer Mehrzahl von Haupttransformatoren (TR1, TR2), die elektrisch mit der Oberleitung (1) und parallel zueinander verbunden sind;
einer Mehrzahl von Schaltkreisunterbrechern (CB1, CB2), die jeweils zwischen der Oberleitung (1) und einer entsprechenden Mehrzahl von Haupttransformatoren (TR1, TR2) verbunden sind; und
einer Steuereinrichtung (80), die dazu konfiguriert ist, die Mehrzahl von Schaltkreisunterbrechern (CB1, CB2) zu schließen und zu öffnen,
**dadurch gekennzeichnet, dass** die Steuereinrichtung (18) dazu konfiguriert ist, die Mehrzahl von Schaltkreisunterbrechern (CB1, CB2) innerhalb eines Zyklus einer Oberleitungsspannung gemäß eines Zeitunterschieds sequenziell zu schließen, wenn eine Leistungszufuhr von der Oberleitung (1) zu dem Wechselstromelektrofahrzeug (3) begonnen wird,
wobei der Zeitunterschied festgesetzt wird basierend auf einem Unterschied in Schließungsphasen, wobei jede Schließungsphase eine Phase der Oberleitungsspannung zu dem Zeitpunkt des Schließens eines jeweiligen der Mehrzahl von Schaltkreisunterbrechern (CB1, CB2) ist, wobei der Unterschied in den Schließungsphasen auf einen Wert festgesetzt ist, der erlangt wird durch Dividieren von 360 Grad durch eine Anzahl der Mehrzahl von Haupttransformatoren (TR1, TR2), wobei die Anzahl der Mehrzahl von Haupttransformatoren (TR1, TR2) zwei oder vier ist.

2. Wechselstromelektrofahrzeug nach Anspruch 1, wobei die Steuereinrichtung (18) dazu konfiguriert ist, die Mehrzahl von Schaltkreisunterbrechern (CB1, CB2) nacheinander zu schließen, wenn das Wechselstromelektrofahrzeug (3) in einen Zufuhrabschnitt von einem Isolationsabschnitt der Oberleitung (1) eintritt, und die Mehrzahl von Schaltkreisunterbrechern (CB1, CB2) zu öffnen, wenn das Wechselstromelektrofahrzeug (3) in dem Isolationsabschnitt ist.

## Revendications

1. Véhicule électrique (3) à courant alternatif qui reçoit une puissance en courant alternatif provenant d'un fil aérien (1), comportant :
une pluralité de transformateurs principaux (TR1, TR2) reliés électriquement au fil aérien (1) et en parallèle ;
une pluralité de disjoncteurs (CB1, CB2), chacun raccordé entre le fil aérien (1) et un transformateur correspondant de la pluralité de transformateurs principaux (TR1, TR2) ; et
un dispositif (18) de commande configuré pour fermer et ouvrir la pluralité de disjoncteurs (CB1, CB2), **caractérisé en ce que** le dispositif (18) de commande est configuré pour fermer séquentiellement, lorsqu'une alimentation de puissance du fil aérien (1) au véhicule électrique (3) à courant alternatif est démarrée, la pluralité de disjoncteurs (CB1, CB2) au cours d'un cycle d'une tension de fil aérien en fonction d'une différence temporelle,
la différence temporelle étant réglée d'après une différence dans des phases de fermeture, chaque phase de fermeture étant une phase de la tension de fil aérien au moment de la fermeture d'un disjoncteur respectif de la pluralité de disjoncteurs (CB1, CB2), la différence dans les phases de fermeture étant réglée à une valeur obtenue en divisant 360 degrés par un nombre de la pluralité de transformateurs principaux (TR1, TR2), le nombre de la pluralité de transformateurs principaux (TR1, TR2) étant de deux ou quatre.

2. Véhicule électrique (3) à courant alternatif selon la revendication 1, le dispositif (18) de commande étant configuré pour fermer séquentiellement la pluralité de disjoncteurs (CB1, CB2), lorsque le véhicule électrique (3) à courant alternatif entre dans un tronçon d'alimentation en provenance d'un tronçon d'isolement du fil aérien (1), et pour ouvrir la pluralité de disjoncteurs (CB1, CB2), lorsque le véhicule électrique (3) à courant alternatif est dans le tronçon d'isolement.
